# EUROPÄISCHE PATENTSCHRIFT

(11) **EP 1 936 245 B1**
(45) Veröffentlichungstag und Bekanntmachung des Hinweises auf die Patenterteilung: **02.05.2012**
(21) Anmeldenummer: 07119888.1
(22) Anmeldetag: 02.11.2007
(51) Int. Cl.: F16J 9/20

(54) **Kolben mit einem Ölsammelring**
Piston with oil collector ring
Piston doté d'un anneau collecteur d'huile

(30) Priorität: 18.12.2006 EP 06126389
(43) Veröffentlichungstag der Anmeldung: 25.06.2008
(73) Patentinhaber: Wärtsilä Schweiz AG, 8401 Winterthur (CH)
(72) Erfinder: Räss, Konrad, 8457 Humlikon (CH)
(74) Vertreter: Sulzer Management AG

(56) Entgegenhaltungen:
- EP-A- 1 571 324
- DE-A- 3 337 861
- DE-A- 19 940 022
- US-A1- 2003 101 958

## Beschreibung

Die Erfindung betrifft einen Kolben mit einem Ölsammelring zur Bildung einer Kolbenringpackung für einen Kolben eines Zweitakt-Grossdieselmotors gemäss dem Oberbegriff des unabhängigen Anspruchs 1.

Die aus dem Stand der Technik bekannten Kolben für Grossdieselmotoren, insbesondere für längs gespülte Zweitakt-Grossdieselmotore, sind in der Regel mit einer Packung aus mehreren, in jeweils einer Kolbenringnut, übereinander angeordneten Kolbenringen ausgestattet. Typischerweise umfassen die bekannten Kolbenringpackungen mindestens zwei Kolbenringe, meist jedoch drei, vier oder sogar fünf Kolbenringe, je nach Grösse und / oder Leistung des Grossdieselmotors bzw. je nach Anforderungen bzw. den speziellen Betriebsbedingungen, unter denen die Maschine betrieben wird.(z.B. EP-A- 1 571 324)

Die Kolbenringe erfüllen dabei ganz unterschiedliche Funktionen, wie zum Beispiel die Verteilung und / oder Abstreifung eines Schmiermittels auf der Lauffläche des Zylinders, die Abdichtung des Brennraums gegen das Kurbelgehäuse, bzw. im Falle von längs gespülten Zweitakt-Grossdieselmotoren die Abdichtung gegen den Receiverraum usw..

Typisch bei längs gespülten Zweitakt-Grossdieselmotoren ist die Verwendung einer Kolbenringpackung bestehend aus vier oder fünf Kolbenringen zur Abdichtung des Brennraums gegen die Kolbenunterseite, die gegen den Receiverraum gerichtet ist, aus dem zu Beginn der Spülphase Frischluft durch die Spülschlitze in den Brennraum des Zylinders strömt. Abhängig vom Ringspalt, sind die unteren Kolbenringe mehr oder weniger stark belastet. Dabei können verschiedenartige Instabilitäten zwischen den unteren Kolbenringen auftreten, die zum Beispiel zu Druckfluktuationen führen können, die ihrerseits wiederum Instabilitäten im Kolbenlauf hervorrufen, weil zu viele Kolbenringe vorhanden sind, die ähnliche oder gleiche Funktionen haben.

Grossdieselmotoren werden häufig als Antriebsaggregate für Schiffe oder auch im stationären Betrieb, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit Brenn- und Betriebsstoffen zentrale Kriterien für den Betrieb der Maschinen. Unter anderem ist das Kolbenlaufverhalten solcher grossbohrigen langsam laufenden Dieselmotoren ein bestimmender Faktor für die Länge der Wartungsintervalle, die Verfügbarkeit und über den Schmiermittelverbrauch auch unmittelbar für die Betriebskosten und damit für die Wirtschaftlichkeit. Damit kommt der komplexen Problematik der Schmierung von Grossdieselmotoren eine immer grössere Bedeutung zu.

Bei Grossdieselmotoren erfolgt die Kolbenschmierung durch Schmiereinrichtungen im sich hin und her bewegenden Kolben oder in der Zylinderwand, durch die Schmieröl auf die Lauffläche der Zylinderwand aufgebracht wird, um die Reibung zwischen Kolben und Lauffläche und damit die Abnützung der Lauffläche und der Kolbenringe zu minimieren. So liegt heute bei modernen Motoren, wie z.B. den Sulzer RTA-Motoren, die Abnutzung der Lauffläche bei weniger als 0.05 mm bei einer Betriebsdauer von 1000 Stunden. Die Schmiermittelfördermenge liegt bei solchen Motoren bei ca. 1.3 g/kWh und weniger und soll nicht zuletzt aus Kostengründen möglichst noch weiter reduziert werden, wobei gleichzeitig der Verschleiss minimiert werden oder zumindest konstant bleiben soll.

Als Schmiersysteme zur Schmierung der Laufflächen sind ganz verschiedene Lösungen bekannt, sowohl was die konkrete Ausführung der Schmiereinrichtungen selbst, als auch was die Verfahren zur Schmierung angeht. So sind Schmiereinrichtungen bekannt, bei denen das Schmieröl durch mehrere Schmiermittelöffnungen, die in Umfangsrichtung in der Zylinderwand untergebracht sind, auf den an der Schmiermittelöffnung vorbeilaufenden Kolben aufgebracht werden, wobei das Schmiermittel durch die Kolbenringe sowohl in Umfangsrichtung als auch in axialer Richtung verteilt wird. Solche Systeme arbeiten mit höheren Schmieröl Förderraten und das Schmieröl wird nicht nur durch die Kolbenringe auf der Lauffläche des Zylinderliners verteilt, sondern auch durch die Spülluft, durch die überschüssige Schmierölmengen zurück in den Zylinderliner geblasen werden, wenn die Spülschlitze im Spültakt frei gegeben sind, so dass ein zusätzlicher Schmiereffekt durch Schmierölnebel erzielt wird.

Dabei zeigt dieses System mit erhöhten Schmierölmengen im Betrieb zwei wesentliche Nachteile: Da mit relativ hohen Schmieröl Förderraten gearbeitet wird, kann es vorkommen, dass die Kolbenringe zu viel Schmieröl zu verarbeiten haben, es treten Verkohlungseffekte auf, die zu entsprechenden Ablagerungen bzw. zu Karbonisierungen insbesondere in den Kolbenringnuten führen können, was wiederum zum Verklemmen der Kolbenringe in den Kolbenringnuten führen kann, wodurch die Dichtwirkung des Kolbenrings beeinträchtigt wird, und woraus im schlimmsten Fall Schäden am Zylinder, den Kolbenringen und dem Kolben selbst resultieren können.

Ein weiterer Nachteil ergibt sich dadurch, dass das Schmiermittel bei dieser Methode nicht grossflächig auf die Lauffläche der Zylinderwand, sondern mehr oder weniger punktuell z.B. zwischen die Kolbenringe auf die Seitenflächen des Kolbens aufgebracht wird, so dass die Verteilung des Schmieröls auf der Lauffläche häufig nur ungenügend gewährleistet ist, was zu überhöhter Hitzeentwicklung infolge übermässiger Reibung und in letzter Konsequenz lokal zu einem Verschweissen der Kontaktflächen von Kolben und Lauffläche mit darauf folgendem Materialausbruch, also zu einem Kolbenfresser führen kann.

Um eine bessere Verteilung des Schmieröls, d.h. um einen gleichmässigeren Schmierölfilm auf der Lauffläche zu gewährleisten, wird beispielsweise in der WO 00/28194 ein Schmiersystem vorgeschlagen, bei welchem das Schmieröl unter hohem Druck mittels Zerstäubungsdüsen, die in den Zylinderwänden untergebracht sind, im wesentlichen tangential zur Zylinderwand in die im Brennraum befindliche Spülluft gesprüht wird, wobei das Schmieröl zu kleinen Partikeln zerstäubt wird. Dadurch wird das zerstäubte Schmieröl in der Spülluft fein verteilt und durch die Zentrifugalkraft des Dralls, den die Spülluft und damit auch die fein darin verteilten Schmierölpartikel tragen, gegen die Lauffläche der Zylinderwand geschleudert. Bei diesem Verfahren wird zwar ein deutlich gleichmässigerer Schmierölfilm auf der Lauffläche erzeugt als bei radialer Schmieröleinspritzung; ein gravierender Nachteil dieses Verfahrens besteht allerdings darin, dass ein nicht unerheblicher Teil des eingesetzten Schmieröls mit der Spülluft weggetragen bzw. beim folgenden Verbrennungstakt mit verbrannt wird. Dadurch entsteht ein unnötig hoher Schmierölverbrauch, was sich deutlich negativ auf die Betriebskosten auswirkt.

Bei einem anderen Verfahren sind im sich bewegenden Kolben bevorzugt mehrere Schmiermitteldüsen untergebracht, so dass das Schmiermittel im wesentliche über die gesamte Höhe der Lauffläche an beliebigen Stellen aufgebracht werden kann.

Dabei ist, wie bereits oben angedeutet, neben der Art und Weise, wie das Schmiermittel auf die Lauffläche der Zylinderwand aufgebracht wird, auch die Dosierung des Schmiermittels ein zentraler Punkt. Die pro Zeit- und Flächeneinheit auf die Lauffläche aufzubringende Menge an Schmiermittel kann im Betrieb der Hubkolbenbrennkraftmaschine von vielen verschiedenen Parametern abhängig sein. So spielt beispielsweise die chemische Zusammensetzung des verwendeten Treibstoffs, insbesondere dessen Schwefelgehalt eine bedeutende Rolle. Neben der Schmierung des Zylinders, also der Herabsetzung der Reibung zwischen Kolben und Zylinderlauffläche, genauer zwischen den Kolbenringen und der Lauffläche der Zylinderwand, dient das Schmiermittel unter anderem auch zur Neutralisation aggressiver Säuren, insbesondere von schwefelhaltigen Säuren, die beim Verbrennungsvorgang im Brennraum des Motors entstehen. Daher können je nach verwendetem Treibstoff unterschiedliche Sorten von Schmiermittel zum Einsatz kommen, die sich unter anderem in ihrer Neutralisationsfähigkeit, für die der so genannte BN-Wert des Schmiermittels ein Mass ist, unterscheiden. So kann es von Vorteil sein bei einem hohem Schwefelgehalt im Brennstoff ein Schmiermittel mit einem höheren BN-Wert zu verwenden, als bei einem Brennstoff mit einem niedrigeren Schwefelgehalt, weil ein Schmiermittel mit einem höheren BN-Wert eine stärkere Neutralisationswirkung gegenüber Säuren aufweist. Auch dient das Schmieröl zum Beispiel als Bindemittel für Wasser, das mit der Spülluft oder auf andere Weise in den Zylinder des Grossdieselmotors gelangen kann.

Oft ist es jedoch auch möglich, dass für Treibstoffe unterschiedlicher Qualität die gleiche Schmiermittelsorte verwendet werden muss. In solchen Fällen kann dann beispielsweise durch entsprechende Erhöhung oder Erniedrigung der eingesetzten Menge an Schmiermittel ein höherer oder niedrigerer Säuregehalt in den Verbrennungsprodukten kompensiert werden.

Ein weiteres Problem bei der Dosierung der aufzutragenden Schmiermittelmenge stellen zeitliche und / oder örtliche Schwankungen des Zustands des Schmiermittelfilms, insbesondere der Dicke des Schmiermittelfilms im Betriebszustand der Hubkolbenbrennkraftmaschine dar.

Selbstverständlich kann die notwendige Menge an Schmiermittel beispielsweise auch von unterschiedlichsten Betriebsparametern, wie der Drehzahl, der Verbrennungstemperatur, der Motortemperatur, der Kühlleistung zur Kühlung des Motors, der Last und vielen anderen Betriebsparametern mehr abhängig. So kann es möglich sein, dass bei gegebener Drehzahl und höherer Last eine andere Menge an Schmiermittel auf die Lauffläche des Zylinders aufgebracht werden muss, als bei gleicher Drehzahl und niedrigerer Last.

Des weiteren kann auch der Zustand der Verbrennungsmaschine an sich einen Einfluss auf die Schmiermittelmenge haben. So ist es beispielsweise bekannt, dass je nach Verschleisszustand von Zylinderlauffläche, Kolbenringen, Kolben und so weiter die einzusetzende Schmiermittelmenge stark variieren kann. So ist bei einem Zylinder mit einer neuen, noch nicht eingefahren Zylinderlauffläche und / oder bei neuen Kolbenringen in der Einlaufphase eine erhöhte Reibung in gewissem Umfang durchaus erwünscht, damit sich die Gegenlaufpartner, also z.B. Kolbenringe und Lauffläche, einschleifen und so optimal aufeinander einstellen können. Das kann unter anderem dadurch erreicht werden, dass in der Einlaufphase eines Zylinders pauschal mit einer anderen Schmiermittelmenge gearbeitet wird, als bei einem Zylinder, der bereits eine beachtliche Zahl von Betriebsstunden in Betrieb ist. Daher ist bei einer Maschine mit mehreren Zylindern die Schmiermittelmenge insbesondere für jeden Zylinder häufig separat einstellbar.

Auch wird im allgemeinen die Zylinderlauffläche sowohl in Umfangsrichtung als auch in Längsrichtung in Abhängigkeit von der Zahl der geleisteten Betriebsstunden unterschiedlich verschleissen. Das gilt analog beispielsweise auch für die Kolbenringe und die Kolben selbst.

Somit muss die Schmiermittelmenge bei einer Hubkolbenbrennkraftmaschine nicht nur in Abhängigkeit von der Zahl der geleisteten Betriebsstunden eingestellt werden, sondern die Schmiermittelmenge sollte auch innerhalb ein und desselben Zylinders an unterschiedlichen Stellen der Lauffläche der Zylinderwand je nach Anforderungen zeitabhängig und örtlich verschieden dosierbar sein.

Daher ist es seit langem bekannt in einer Lauffläche eines Zylinders oder im sich bewegenden Kolben in unterschiedlichen Bereichen Schmiermitteldüsen vorzusehen, die bevorzugt alle einzeln ansteuerbar sind, so dass die Schmiermittelmenge je nach Anforderung sowohl zeitlich als auch örtlich flexibel variiert werden kann.

Um die von einer bestimmten Schmiermitteldüse zu einem bestimmten Zeitpunkt einzubringende Menge an Schmiermittel zu ermitteln, sind verschiedene Verfahren bekannt. In einfachen Fällen wird die Schmiermittelmenge, eventuell unter Berücksichtigung der Qualität des verwendeten Treibstoffs und des Schmiermittels selbst, einfach in Abhängigkeit vom Betriebszustand der Hubkolbenbrennkraftmaschine gesteuert, zum Beispiel als Funktion der Last oder der Drehzahl, wobei aufgrund von bereits geleisteten Betriebsstunden auch der Verschleisszustand der Gegenlaufpartner Berücksichtigung finden kann.

Dabei sind durchaus auch differenziertere Methoden zur Regulierung der Schmiermittelmenge bekannt. So wird beispielsweise in der CH 613 495 eine Zylindervorrichtung für eine Kolbenbrennkraftmaschine offenbart, die zur Verhütung des Fressens von Kolbenringen während des Betriebs abnormale Reibungszustände der Kolbenringe mittels eines Temperatur- oder Vibrationsfühlers detektiert und beim Auftreten solcher Störungen die Schmierölmenge, die von einer bestimmten Schmierstelle abgegeben wird, erhöht. Die EP 0 652 426 zeigt ein Verfahren, bei welchem durch zyklisches Messen der Temperatur in der Zylinderwand das Auftreten von Scuffing bzw. Verschleissfressen anhand eines dafür charakteristischen Temperaturverlaufs erkannt wird und einer entsprechenden Schädigung durch eine automatische Leistungsreduzierung und / oder durch Erhöhung der Schmiermittelzufuhr entgegengewirkt wird. Eine weitere bekannte Methode zum frühzeitigen Erkennen von kritischen Betriebszuständen einer Brennkraftmaschine ist die in der EP 1 006 271 gezeigte Ultraschallmethode, bei welcher mittels in einem Zylinder angeordneten Ultraschallwandlers der Gegenlaufpartner mit Ultraschallsignalen beaufschlagt wird und die reflektierten Echosignale zur Bestimmung des Zustandes des Gegenlaufpartners herangezogen wird.

Um die weiter oben eingehend diskutierten Probleme mit zu hohen Schmierölmengen zumindest teilweise zu vermeiden, wird versucht, die Schmiermittelmenge zu minimieren und die Maschine im Zustand oder nahe der der Mangelschmierung zu betreiben. Bei kleineren Schmierölförderaten können jedoch neue Probleme entstehen, die zum Teil noch gravierender sein können, als bei zu starker Schmierung der Lauffläche des Zylinders.

So ist bei kleinen Schmierölförderraten insbesondere die kontrollierte Verteilung des Schmieröls auf der Zylinderlauffläche durch die Kolbenringe problematisch. Z.B. kann in bestimmten Betriebszuständen oder wenn die gegeneinander reibenden Komponenten einen bestimmten Verschleisszustand haben, die pro Förderintervall geförderte Schmierölmenge zu klein sein. Je nach Qualität des Schmieröls, bestimmten Umweltbedingungen, wie z.B. die Feuchte und / oder Temperatur der Spülluft oder bei bestimmten Betriebszuständen der Maschine kann sich das Schmieröl schlechter auf der Lauffläche verteilen. Auch zu grosse Distanzen zwischen den Schmierölöffnungen in der Zylinderwand, grosse Durchmesser der Zylinderliner oder zu lange Hubwege können ein Problem darstellen. Ebenso wie ein zu grosses Spiel in den Ringnuten der Kolbenringe, das dazu führen kann, dass übermässig viel Öl in den Ringnuten gespeichert wird, wodurch die freie Beweglichkeit des Kolbenrings erheblich beeinträchtigt werden kann. Auch ist die Form der Kolbenringe nicht für alle Schmierfilmzustände optimal angepasst. Darüber hinaus können Undichtigkeiten am Kolbenring auftreten, z.B. weil in den Ringnuten der Kolbenring ein zu grosses Spiel hat, aufgrund von Reibungseffekten oder z.B. weil Verschleiss an der Zylinderlauffläche und / oder am Kolbenring eine optimale Dichtung und / oder Schmierölverteilung der Kolbenringe gegen die Lauffläche verhindern.

Der Fachmann hat somit zwischen grundsätzlich verschiedenartigen Zuständen der Schmierung zu differenzieren. So wird im allgemeinen der Bereich der so genannten hydrodynamischen Schmierung, vom Zustand der Mangelschmierung und der Mischschmierung unterschieden. Von hydrodynamischer Schmierung spricht man, wenn sich zwischen den Gegenlaufpartnern, also zum Beispiel zwischen der Lauffläche einer Zylinderwand und dem Kolbenring eines Kolbens ein Schmiermittelfilm von solcher Dicke ausgebildet ist, dass die Oberflächen der Gegenlaufpartner durch den Schmiermittelfilm voneinander wohl getrennt sind, so dass diese sich nicht berühren. Einen anderen Grenzfall stellt der so genannte Zustand der Mischreibung oder Mischschmierung dar. Im Falle der Mischreibung ist der Schmiermittelfilm zwischen den Gegenlaufpartner, zumindest teilweise, so dünn, dass sich die Gegenlaufpartner unmittelbar berühren. In diesem Fall besteht die Gefahr von Scuffing und letztlich der Ausbildung eines Kolbenfressers. Zwischen diesen beiden Grenzfällen ist die Mangelschmierung angesiedelt. Im Zustand der Mangelschmierung ist der Schmiermittelfilm gerade noch so dick, dass sich die Gegenlaufpartner nicht mehr berühren; die Schmiermittelmenge zwischen den Gegenlaufpartnern reicht jedoch nicht aus, dass sich eine hydrodynamische Schmierung aufbauen könnte. Im Stand der Technik wird sowohl der Zustand der Mischschmierung, als auch der reinen Mangelschmierung möglichst verhindert. Das heisst, die Dicke des Schmiermittelfilms wird bevorzugt so gewählt, dass sich ein Zustand der hydrodynamischen Schmierung zwischen den Gegenlaufpartnern einstellt.

Der Betrieb im Bereich der hydrodynamischen Schmierung hat natürlich einen entsprechend hohen Schmiermittelverbrauch zur Folge. Das ist einerseits nicht nur ausgesprochen unwirtschaftlich, sondern es hat sich überraschenderweise auch gezeigt, dass nicht nur ein Schmiermittelmangel, sondern auch ein Schmiermittelüberschuss zu Schädigungen der Gegenlaufpartner im Zylinder führen kann.

Zur Lösung dieser Problematik schlagen Amoser et al. in der EP 1 643 088 A1 ein Verfahren und eine Vorrichtung zum Schmieren einer Hubkolbenbrennkraftmaschine vor, womit der Schmierfilm auf der Zylinderlauffläche lokal optimierbar ist, indem der Zustand des Schmierfilms ständig lokal überwacht wird und die Schmieröldüsen entsprechend angesteuert werden, so dass die Schmierölmenge im Betriebszustand ständig angepasst und optimiert werden kann.

Auch wenn damit wesentliche zentrale Problem, wie sie oben ausführlich beschrieben wurden, gelöst werden konnten, kann mit der dort beschriebenen Technik die Verteilung des bereits auf die Zylinderlauffläche aufgebrachten Schmieröls nur unzureichend bzw. nur unwesentlich beeinflusst werden.

Die Aufgabe der Erfindung ist es daher, einen verbesserten Kolben mit einem Kolbenring zur Bildung einer Kolbenringpackung, insbesondere für einen längs gespülten Zweitakt-Grossdieselmotor vorzuschlagen, mit dem eine deutlich bessere Verteilung des Schmieröls auf der Zylinderlauffläche ermöglicht wird, so dass ein verbessertes Laufverhalten des Kolbens, eine höhere Verschleissfestigkeit, und damit ein wirtschaftlicherer Betrieb bei höchster Laufsicherheit des Zweitakt-Grossdieselmotors gewährleistet ist.

Die diese Aufgaben lösenden Gegenstände der Erfindung sind durch die Merkmale des unabhängigen Anspruchs 1 gekennzeichnet.

Die abhängigen Ansprüche beziehen sich auf besonders vorteilhafte Ausführungsformen der Erfindung.

Die Erfindung betrifft somit einen Kolben für einen Zweitakt-Gossdieselmotor, umfassend einen Ölsammelring zur Bildung einer Kolbenringpackung für einen Kolben eines Zweitakt-Grossdieselmotors, welcher Kolben im Einbauzustand entlang einer Zylinderwand eines Zylinders des Zweitakt-Grossdieselmotors hin- und her bewegbar angeordnet ist, und wobei die Kolbenringpackung einen einem Brennraum des Zylinders am nächsten gelegenen ersten Kolbenring mit einer ersten Lauffläche, sowie den Ölsammelring mit einer Sammelringlauffläche umfasst. Der erste Kolbenring ist in einer ersten Kolbenringnut und der Ölsammelring in einer Sammelringnut des Kolbens derart angeordnet, dass im Betriebszustand die erste Lauffläche des ersten Kolbenrings und die Sammelringlauffläche des Ölsammelrings mit einer Zylinderlauffläche der Zylinderwand in reibendem Kontakt stehen. Erfindungsgemäss weist der Kolben im Bereich der Sammelringnut und / oder in der Sammelringnut eine Schmierölöffnung auf, wobei der Kolben derart ausgestaltet ist, dass durch die Schmierölöffnung aus dem Inneren des Kolbens Schmieröl auf die Zylinderlauffläche aufbringbar ist.

Wesentlich für die Erfindung ist somit, dass erstmals ein Kolben zur Verfügung gestellt wird, bei welchem Schmieröl aus dem Inneren des Kolbens über Schmierölöffnungen im Bereich der Sammelringnut, insbesondere über Schmierölöffnungen in der Sammelringnut selbst, auf die Zylinderlauffläche aufbringbar ist, wodurch eine verbesserte Dosierung und Verteilung des Schmieröls auf der Zylinderlauffläche erreichbar ist.

Bevorzugt ist dabei in der Umfangsfläche des Kolbens und / oder in der Sammelringnut und / oder in einer Kolbenringnut ein Abführkanal vorgesehen.

Im Speziellen ist der Ölsammelring mit einer in der Sammelringlauffläche in Umfangsrichtung ausgebildeten Ausnehmung ausgestaltet.

Besonders bevorzugt ist die Ausnehmung eine Ölsammelnut, die durch zwei in Umfangsrichtung des Ölsammelrings verlaufende Sammellippen gebildet ist.

Der Ölsammelring des erfindungsgemässen Kolbens ist somit ein Kolbenring, der bevorzugt, aber nicht notwendig, durch mindestens eine, im Speziellen durch zwei äussere Lippen begrenzte aussen umlaufende Nut aufweist, wobei die Lippen die Sammelringlauffläche des Ölsammelrings bilden, die mit der Zylinderlauffläche der Zylinderwand in reibendem Kontakt stehen. Durch die in Umfangsrichtung ausgebildete Ausnehmung kann der erfindungsgemässe Ölsammelring im Betriebszustand Schmieröl in der Ausnehmung, im Speziellen in der Ölsammelnut, sammeln und bevorraten, so dass einerseits lokal überschüssiges Schmieröl gesammelt, also der Zylinderlauffläche entzogen werden kann, wobei das in der Ausnehmung zwischengespeicherte Schmieröl anderseits an Stellen, die z.B. mehr Schmieröl benötigen, wieder aus der Ausnehmung auf die Zylinderlauffläche aufbringbar ist.

Das heisst, der Ölsammelring des erfindungsgemässen Kolbens fungiert im Betriebszustand des Grossdieselmotors gleichzeitig als Ölabstreifring, als Sammelring und als Verteilring. Dadurch steht mit dem erfindungsgemässen Ölsammelring erstmals ein Kolbenring, insbesondere für längs gespülte Zweitakt-Grossdieselmotoren zur Verfügung, mit welchem einerseits die Menge an Schmieröl auf der Zylinderlauffläche und damit die Dicke des Schmierölfilms, zum Beispiel durch eine speziell angepasste Wahl der Geometrie des Ölsammelrings und / oder der Auswahl der den Ölsammelring bildenden Materialien, einstellbar ist, und andererseits das Schmieröl sowohl in Längsrichtung als auch in Umfangsrichtung optimal auf der Zylinderlauffläche verteilbar ist.

Dabei sind ähnliche Ringe aus kleinen Viertakt Serienmotoren für Kraftfahrzeuge oder Motorräder bekannt. Bei diesen wird das Schmieröl in einer Ölwanne mitgeführt, wobei die Zylinderschmierung einfach durch Aufwirbeln von Schmieröl aus dem Kurbelgehäuse durch die Rotationsbewegung der Kurbelwelle bewerkstelligt wird. Das abtropfende Schmieröl wird wieder in der Ölwanne gesammelt.

Das heisst, Viertakt-Motoren, wie sie z.B. in Kraftfahrzeugen zum Einsatz kommen, arbeiten nach einem völlig anderen Schmierprinzip, als dies bei Zweitakt-Grossdieselmoteren der Fall. Bei den bekannten Viertakt-Motoren steht nämlich auf der Zylinderlauffläche nicht nur in ausreichender Menge Schmieröl zur Verfügung, sondern es ist in der Regel sogar Schmieröl im Überfluss auf der Zylinderlauffläche vorhanden, so dass das Schmieröl in grossen Mengen zurück in die Wanne des Kurbelgehäuses abgestreift werden muss.

Bei diesen Motoren ist daher der unterste Kolbenring als Ölabstreifring ausgestaltet, der auch eine durch zwei umlaufende Lippen gebildete Nut aufweisen kann, in der ebenfalls Schmieröl speicherbar ist, und dessen Hauptaufgabe darin besteht, überschüssiges Schmieröl, das bei dieser Art der Schmierung in sehr grossen Mengen auf die Zylinderlauffläche aufgewirbelt wird, nach unten in die Ölwanne abzustreifen, so dass es möglichst nicht in den Brennraum gerät und dort verbrennt. Im übrigen dienen auch die bei kleinen Viertaktmotoren bekannten Ölabstreifringe gleichzeitig dazu, das Schmieröl auf der Zylinderlauffläche zu verteilen.

Bei längs gespülten Zweitakt-Grossdieselmotoren ist man bisher jedoch davon ausgegangen, dass solche Kolbenringe insbesondere auf der dem Brennraum abgewandten Unterseite des Kolbens, prinzipiell nicht einsetzbar sind. Der Grund dafür ist, dass ein längs gespülter Zeitakt-Grossdieselmotor konstruktiv und von seiner Funktion her von einem kleinen Viertakt Motor grundsätzlich verschieden ist.

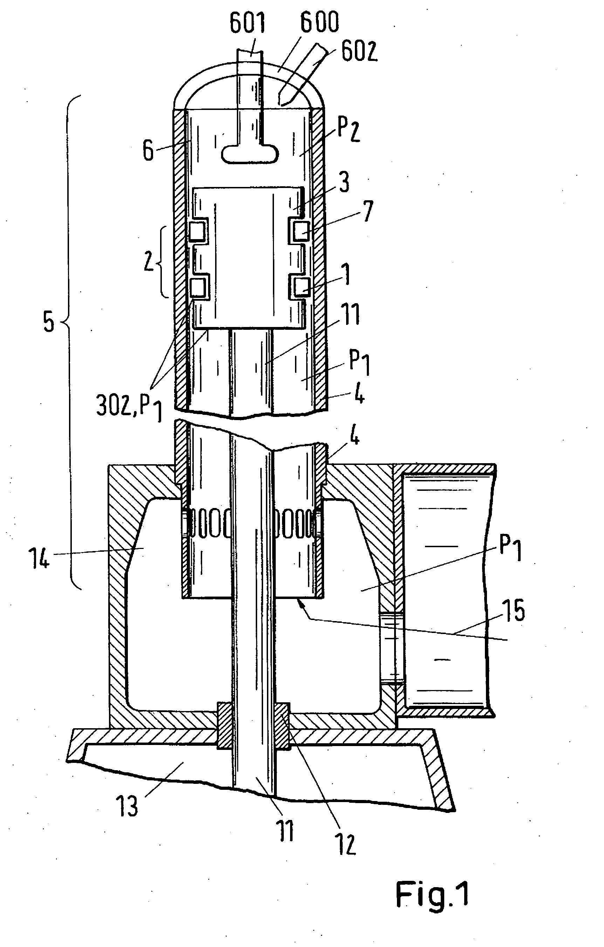

Wie später noch anhand der Fig. 1 näher erläutert wird und dem Fachmann allgemein bekannt ist, liegt im Receiverraum, aus dem Frischluft im Spültakt über die Spülschlitze in den Brennraum des Grossdieselmotors gelangt, wenn der Kolben in der Nähe seines unteren Totpunktes die Spülschlitze freigibt, ständig die vom Abgasturbolader bereitgestellte Frischluft unter einem sehr hohen Druck von z.B. mehr als einem bar im Teillastbetrieb, oder sogar zwei, drei, vier bar oder mehr im Volllastbetrieb an.

Dadurch ist bei einem längs gespülten Zweitakt-Grossdieselmotor die Unterseite des Kolbens, also die Seite des Kolbens, die dem Receiverraum zugewandt ist, immer mit dem erheblichen statischen Druck der Frischluft, die der Abgasturbolader bereitstellt, beaufschlagt.

Im Spültakt, wenn also der Kolben bei geöffnetem Auslassventil sich von seinem unteren Totpunkt in Richtung zu seinem oberen Totpunkt, bei dem das Brennraumvolumen am kleinsten ist, bewegt, um die Verbrennungsgase über das geöffnete Auslassventil aus dem Brennraum in die Abgasleitung zu befördern, herrscht somit zwischen Brennraum und Kolbenunterseite eine erhebliche Druckdifferenz von z.B. drei bar oder mehr, da bei geöffnetem Auslassventil der Druck im Brennraum nicht wesentlich vom Umgebungsluftdruck in Höhe von ca. einem bar abweicht, während die Kolbenunterseite mit dem erheblichen Druck von z.B. vier bar oder mehr, den der Abgasturbolader erzeugt, beaufschlagt ist.

Daher war man bisher der Auffassung, dass nicht nur der Topring, also derjenige Kolbenring, der dem Brennraum am nächsten liegt, eine sehr gute Dichtwirkung haben muss, um den erheblichen Druck, der bei der Verbrennung im Brennraum entsteht, abzudichten.

Sondern nach allgemein herrschender Meinung, musste auch der dem Receiverraum am nächsten gelegene Kolbenring, also der unterste Kolbenring der Kolbenringpackung, eine erhebliche Dichtwirkung aufweisen, um zu verhindern, dass durch den hohen Druck der Frischluft, durch den die Kolbenunterseite ständig beaufschlagt ist, Luftströmungen am untersten Kolbenring vorbei entstehen. Es wurde zurecht befürchtet, dass durch solche, am untersten Kolbering vorbeiströmende Luft die Führung des Kolbenrings sehr negativ beeinflusst wird, der Kolbering den Kontakt mit dem Schmierfilm verlieren könnte und der Schmierfilm selbst auf der Zylinderlauffläche zumindest lokal durch die Luftströmung negativ beeinflusst wird, bzw. dass der Schmierölfilm ganz oder teilweise von der vorbeiströmenden Luft mitgerissen wird und der Schmierölfilm so zumindest teilweise abreisst, so dass zumindest der untere Kolbenring ohne, oder zumindest mit unzureichender Schmierung auf der Zylinderlauffläche läuft, was schliesslich zum gefürchteten Scuffing, also zum Fressen des Kolberings auf der Zylinderlauffläche führen könnte.

Derartige Probleme sind natürlich bei den üblichen kleinen Viertakt Motoren nicht zu befürchten, da hier die Druckdifferenz zwischen Kurbelgehäuse, also der Unterseite des Kolbens und dem Brennraum bei geöffnetem Auslassventil im wesentlichen gleich null ist und, im Gegensatz zum Grossdieselmotor, aufgrund des völlig anderen Schmiersystems, immer eine grosse Menge an Schmieröl im Bereich des Ölabstreifrings vorhanden ist.

Überraschender Weise hat sich jedoch gezeigt, dass auch bei längs gespülten Zweitakt-Grossdieselmotoren der untere Kolbenring, also derjenige Kolbering der dem Receiverraum am nächsten liegt, noch eine genügende Dichtwirkung aufweist, wenn die Lauffläche dieses Kolberings, die mit der Zylinderwand über den Schmierölfilm in reibendem Kontakt steht, durch das Vorhandensein einer erfindungsgemässen Ausnehmung deutlich reduziert ist.

Somit ist es durch diese Erkenntnis erstmals möglich, einen Ölabstreifring gemäss der vorliegenden Erfindung bereitzustellen, mit welchem die oben genannten vorteilhaften Eigenschaften erzielbar sind.

In einem bevorzugten Ausführungsbeispiel umfasst der Ölsammelring eine Vorratstasche zur Bildung eines Ölvorrats, so dass in der Vorratstasche ein zusätzlicher Ölvorrat gebildet werden kann, der einerseits gewährleistet, dass auch grosse überschüssige Mengen an Schmieröl von der Zylinderlauffläche zuverlässig gesammelt werden können und andererseits immer ein genügend grosser Vorrat an Schmieröl zur Verteilung auf der Zylinderlauffläche zur Verfügung steht..

Der Ölsammelring kann dabei in der Sammelringnut mit einem Federelement derart federnd gelagert sein, dass der Ölsammelring im Betriebszustand mit einer vorgebbaren Kraft an die Zylinderlauffläche anpressbar ist. Dadurch kann einerseits die Dichtwirkung zusätzlich verbessert werden. Anderseits wird durch das Federelement das Laufverhalten des Ölsammelrings weiter stabilisiert.

Um überschüssige Mengen an Schmieröl abzuführen, die definitiv nicht zur Schmierung der Lauffläche benötigt werden, kann der Ölsammelring eine Abführöffnung umfassen, die durch Schmieröl in die Sammelringnut abgeführt werden kann.

In einem anderen Ausführungsbeispiel umfasst der Ölsammelring eine Zufuhröffnung, durch die, falls notwendig, zusätzliches Schmieröl auf die Zylinderlauffläche, insbesondere aus dem Inneren des Kolbens über die Schmierölöffnungen durch die Zufuhröffnung auf die Zylinderlauffläche aufgebracht werden kann.

Zusätzlich oder alternativ kann die Sammellippe auch eine Quernut umfassen, die im Speziellen auch als Belüftungsnut bezeichnet werden kann, so dass ein zusätzlicher Austausch von Schmieröl zwischen der Ausnehmung bzw. der Ölsammelnut und der Zylinderwand möglich ist, so dass das Schmieröl noch besser und gleichmässiger auf der Zylinderwand durch den Ölsammelring verteilbar ist bzw. auf Grund eines Druckgefälles zwischen der durch die Sammellippen gebildeten Ausnehmung und dem Druck ausserhalb der Ausnehmung des Ölsammelrings ein besserer Austausch von Schmieröl erreichbar ist, so dass z.B. ein zu starkes Abstreifen von Schmieröl verhinderbar ist, weil ein vorgebbarer Anteil an Schmieröl durch die Quernut beim Abstreifen in die Ausnehmung des Ölsammelrings fliessen kann, und somit der Schmierung weiterhin zur Verfügung steht.

Dabei ist es selbstverständlich möglich, das Volumen der Ausnehmung, die durch die Ölsammellippen gebildet wird, im konkreten Fall so zu wählen, das für einen ganz bestimmten Maschinentyp, bzw. für besonders bevorzugte Betriebszustände des Grossdieselmotors, die durch den Ölsammelring im Betriebszustand abzustreifende Menge an Schmieröl optimal angepasst ist. Das heisst, durch die spezielle geometrische Ausgestaltung des Ölsammelrings kann das Verhältnis der Menge an Schmieröl, das abgestreift wird und derjenigen Menge, die zur Schmierung auf der Zylinderwand verteilt wird, eingestellt und optimiert werden.

Bevorzugt, aber nicht notwendig, verfügt der Ölsammelring über einen Korrosionsschutz und / oder einen Verschleissschutz und / oder eine Einlaufschicht und / oder der Ölsammelring ist aus einem korrosionsfesten und / oder einem verschleissfesten Material gefertigt und / oder der Verschleissschutz ist eine Verschleissschutzbeschichtung, insbesondere eine metallische und / oder eine nicht metallische Verschleissschutzbeschichtung, und / oder der Korrosionsschutz ist eine Korrosionsschutzbeschichtung, insbesondere eine metallische und / oder eine nicht metallische Korrosionsschutzbeschichtung.

Dabei können selbstverständlich neben dem Ölsammelring auch alle oder einige der weiteren Kolbenringe einen entsprechenden Verschleissschutz bzw. eine entsprechende Einlaufschicht umfassen.

In einem speziellen Ausführungsbeispiel ist der Ölsammelring und / oder ein weiterer Kolbenring aus einem verschleissfesten Material gefertigt. Das heisst, das üblicherweise als Kolbenringmaterial verwendete Gussmaterial kann durch die Zugabe geeigneter Bestandteile bzw. geeigneter Legierungselemente verschleissfest gestaltet werden. Das kann zum Beispiel durch Legierung oder Zugabe der bekannten dazu geeigneten Materialien geschehen, beispielsweise durch Zugabe von Keramiken oder Oxyden, wie Chrom, Chrom-Keramik, Aluminiumoxid, Silikate, Diamantpartikel, insbesondere Tritor, CKS-36, CKS-37, Karbiden, insbesondere Chromkarbid, die dem Fachmann als Verschleissschutzmaterialen, insbesondere für Kolbenringe, wohlbekannt sind. Es versteht sich, dass in speziellen Fällen der Kolbenring insgesamt aus einem verschleissfesten Material gefertigt werden kann, so dass auf das aus dem Stand der Technik bekannte, und für Kolbenringe üblicherweise verwendete Gussmaterial ganz oder teilweise verzichtet werden kann.

In einem für die Praxis besonders wichtigen Ausführungsbeispiel ist der Verschleissschutz eine Verschleissschutzbeschichtung. Dabei kann die Dicke der Verschleissschutzbeschichtung des Ölsammelrings und / oder eines weiteren Kolbenrings 100% der Dicke, im Besonderen nur ¾ der Dicke, bevorzugt nur ½ der Dicke, insbesondere nur 1/3 der Dicke, im Speziellen nur ¼ der Dicke oder maximal 10% der Dicke der Verschleissschutzbeschichtung des Toprings sein.

Dabei kann es besonders vorteilhaft sein, wenn die Dicke der Verschleissschutzbeschichtung des Toprings, also desjenigen Kolbenrings, der dem Verbrennungsraum am nächsten liegt, grösser ist als die Verschleissschutzbeschichtung der übrigen darunter liegenden Kolbenringe.

Da die Belastung des zweiten und die jedes weiteren Kolbenrings durch die Verbrennung im Verbrennungsraum in der Regel deutlich kleiner ist, als die Belastungen denen der Topring im Betriebszustand ausgesetzt ist, kann in vielen Fällen die Dicke der Verschleissschutzschicht des zweiten, dritten und eventuell weiterer Kolbenrings kleiner gewählt werden, als die Dicke des ersten Kolbenrings. Typische Werte für die Dicke der Verschleissschutzschicht des Toprings sind zum Beispiel 200µm bis 600µm, insbesondere 300µm - 400µm. Die Dicke der Verschleissschutzschicht eines weiteren Kolbenrings, z.B. des Ölsammelrings kann dann kleiner gewählt werden, z.B. 10µm - 200µm, im Speziellen 50µm - 100µm.

Die Wahl einer geringeren Dicke für die Verschleissschutzschicht der unter dem Topring angeordneten Kolbenringe, wie z.B. des Ölsammelrings, ist dabei allein schon aus wirtschaftlichen Erwägungen heraus interessant. Die Verschleissschutzschichten werden nämlich bevorzugt galvanisch oder mittels Laser-Cladding aufgebracht, so dass mit steigender Schichtdicke auch entsprechend der notwendige Zeitaufwand für den Schichtaufbau ansteigt.

Dabei versteht sich, dass die Verschleissschutzschicht natürlich auch mit jeder anderen geeigneten Beschichtungsmethode herstellbar ist, also zum Beispiel mit den bekannten thermischen Spritzmethoden, wie HVOF, Plasmaspritzen, Flammspritzen, Pulverspritzen und jeder anderen geeigneten Beschichtungsmethode, wie zum Beispiel Auftragsschweissen usw..

Der Verschleissschutz, das heisst der Kolbenring als solches bzw. die Verschleissschutzbeschichtung, zum Beispiel auf einem Kolbenring aus GussMaterial, kann unter anderem Chrom und / oder Aluminiumoxid und / oder Silikate und / oder Diamantpartikel und / oder Chromkeramik, insbesondere Tritor und / oder CKS-36 und / oder CKS 37 und oder ein Karbid, insbesondere Chromkarbid umfassen. Geeignet sind letztlich alle bekannten Verschleissschutzmaterialien, die vorteilhaft für die Bildung einer Verschleissschutzschicht bzw. für die Herstellung eines Kolbenrings aus einem verschleissfesten Material geeignet sind.

In einem anderen Ausführungsbeispiel ist es auch möglich, dass der dem Topring am nächsten gelegene Kolbenring eine Einlaufschicht umfasst, während ein darunter gelegener dritter und / oder der erfindungsgemässe Ölabstreifring einen Verschleissschutz umfasst. Das kann insbesondere dann von Vorteil sein, wenn die Belastung, die im Betriebszustand auf den dem ersten Kolbenring am nächsten gelegenen Kolbenring wirkt, eine vorgebbare Belastungsgrenze nicht übersteigt, so dass an diesem Kolbenring auf einen Verschleissschutz verzichtet werden kann. Ein darunter liegender Kolbenring jedoch einen Verschleissschutz aufweist, weil dadurch zum Beispiel der Ölfilm im Bereich der Kolbenringpackung verbessert wird, so dass dadurch die tribologischen und sonstigen Laufeigenschaften der Kolbenringpackung insgesamt optimierbar sind.

Wie bereits erwähnt, kann dabei der erste Kolbenring, also der Topring und /oder ein weiterer Kolbenring einen Korrosionsschutz und / oder einen Verschleissschutz und / oder eine Einlaufschicht umfassen und / oder der erste Kolbenring und / oder der weitere Kolbenring kann aus einem korrosionsfesten und / oder verschleissfesten Material gefertigt sein und / oder der Verschleissschutz kann eine Verschleissschutzbeschichtung, insbesondere eine metallische und / oder eine nicht metallische Verschleissschutzbeschichtung sein, und / oder der Korrosionsschutz kann eine Korrosionsschutzbeschichtung, insbesondere eine metallische und / oder eine nicht metallische Korrosionsschutzbeschichtung sein.

Insbesondere kann in einem bevorzugten Ausführungsbeispiel der Kolben selbst, insbesondere im Bereich der ersten Kolbenringnut und / oder einer weiteren Kolbenringnut und / oder im Bereich der Sammelringnut einen Korrosionsschutz und / oder einen Verschleissschutz umfassen und / oder der Kolben kann aus einem korrosionsfesten und / oder verschleissfesten Material gefertigt sein und / oder der Verschleissschutz ist eine Verschleissschutzbeschichtung, insbesondere eine metallische und / oder eine nicht metallische Verschleissschutzbeschichtung, und / oder der Korrosionsschutz ist eine Korrosionsschutzbeschichtung, insbesondere eine metallische und / oder eine nicht metallische Korrosionsschutzbeschichtung.

In einem für die Praxis wichtigen Ausführungsbeispiel weist der Kolben im Bereich einer Umfangsfläche, insbesondere im Bereich der Sammelringnut und / oder in der Sammelringnut eine Schmierölöffnung auf, die derart ausgestaltet und angeordnet ist, dass durch die Schmierölöffnung aus dem Inneren des Kolbens Schmieröl auf die Zylinderlauffläche aufbringbar ist und / oder in der Umfangsfläche des Kolbens und / oder in der Sammelringnut und / oder in einer Kolbenringnut ist ein Abführkanal und / oder ein vorgesehen.

Das heisst, je nach Anforderung ist es möglich, dass, in an sich bekannter Weise, am Kolben Schmierölöffnungen oder Schmieröldüsen vorgesehen sind, aus denen Schmieröl, das den Schmierölöffnungen aus einem Schmierölvorrat durch das Innere des Kolbens zugeführt wird, zur Schmierung auf die Zylinderwand aufbringbar ist. Dadurch wird erreicht, dass an jedem Ort des Kolbens im Zylinder Schmieröl im Bedarfsfall auf die Zylinderlauffläche aufbringbar ist.

Andererseits können, alternativ oder zusätzlich am Kolben auch Abführkanäle vorgesehen sein, durch die überschüssiges Schmieröl, das sich z.B. in oder in der Nähe der Sammelringnut oder an einem anderen Ort an der Oberfläche des Kolbens gesammelt hat, in und durch das Kolbeninnere abgeleitet werden, so dass der Zylinderlauffläche überschüssiges Schmieröl entzogen werden kann.

Eine für die Praxis besonders wichtige Anordnung kann im Detail z.B. wie folgt aufgebaut sein.

Die Kolbenringpackung umfasst einen Topring der so ausgestaltet ist, dass er den Verbrennungsraum im wesentlichen, zumindest ausreichend gasdicht gegen die Kolbenunterseite abdichtet. Wie bereits oben beschrieben, kann er z.B. einen Verschleissschutz umfassen und ein optimiertes Profil aufweisen, das einerseits eine gute Abdichtung garantiert und andererseits den Aufbau eines optimalen Ölfilms gewährleistet. Dazu kann z.B. die axiale Höhe des Toprings grösser als seine Breite in radialer Richtung sein. Ein solcher Ring läuft auch selbst dann perfekt auf der Zylinderwand, wenn er konisch oder oval geformt ist, z.B. durch Abnutzungseffekte.

Ein darunter liegender zweiter Kolbenring fungiert als Hilfs- oder Not-Dichtring. Im Fall, dass der Topring seine Dichtfähigkeit ganz oder teilweise verliert, erlaubt der zweite Ring zumindest zeitweise den weiteren Betrieb der Maschine. Es versteht sich, dass auch dieser Ring, wie weiter oben ausführlich beschrieben, entsprechende Schutzschichten oder Einlaufschichten umfassen kann und / oder aus entsprechenden Materialien gefertigt sein kann. Aus Sicherheitsgründen kann sogar noch mindestens ein weiterer dritter Kolbenring in der Art des zuvor beschrieben zweiten Kolbenrings vorgesehen sein.

Der unterste Kolbering ist schliesslich ein erfindungsgemässer Ölsammelring, der gleichzeitig als Abstreifring, Sammelring und Verteilring fungiert. Unter anderem streift der Ölsammering / bzw. sammelt der Ölsammelring überschüssiges Öl ab, bzw. sammelt es wie oben beschrieben auf, so dass den darüber liegenden Dichtungsringen, also dem ersten, zweiten, dritten oder einem weiteren Kolbenring, kein überschüssiges Schmieröl, d.h. keine zu grosse Schmierölmenge zugeführt wird.

Ausserdem kann der erfindungsgemässe Ölsammelring auch andere Flüssigkeiten von der Zylinderwand entfernen bzw. abstreifen, wie z.B. Kondenswasser, das unter anderem aus der Spülluft stammen kann, Schwefelsäure oder auch andere feste oder flüssige Stoffe, die mit der Spülluft oder auf anderem Wege auf die Zylinderlauffläche gelangt sind, vorteilhaft entfernen, das heisst sammeln oder abstreifen oder auch verteilen.

Der Ölsammelring umfasst bevorzugt ein oder zwei Sammellippen, deren Form entsprechend optimiert sein kann, so dass der Ölsammelring seine verschiedenen Funktionen gleichzeitig optimal ausführen kann, wobei die Sammellippen ebenfalls beschichtet und / oder aus einem entsprechenden Material gefertigt sein können, wie weiter oben bereits unter anderem für die Kolberinge als solches bzw. den Kolben selbst beschrieben.

Bevorzugt umfasst der Ölsammelring Furchen und / oder Taschen, die es erlauben, eine vorgebbare Menge an Schmieröl von der Lauffläche des Zylinders zu sammeln und in den Furchen und / oder Taschen zu speichern.

Im Fall, dass sich weitere feste, flüssige oder gasförmige Stoffe an der Zylinderlauffläche befinden, wie z.B. andere Flüssigkeiten, Säuren oder Verunreinigungen, können diese durch Additive im Schmieröl, ganz oder teilweise im Ölsammerring, vor allem in dessen Furchen und Taschen, neutralisiert werden.

Die Sammeltaschen und / oder Furchen können dabei oberhalb und / oder unterhalb und / oder zwischen den Sammellippen angeordnet und vorgesehen sein. Das gespeicherte Schmieröl kann dann ganz oder teilweise über die gesamte relevante Zylinderlauffläche des Zylinderliners verteilt werden, so dass auch bei sehr kleinen Mengen an zugeführtem Schmieröl immer eine perfekte Verteilung des Schmieröls auf der Zylinderlauffläche garantiert ist.

Bevorzugt ist der Ölsammerring mit einem Federelement belastet, das den Ölsammelring bzw. die Sammellippen mit einer vorgebbaren Kraft an die Lauffläche des Zylinders anpresst.

Wie ebenfalls bereits erwähnt, kann insbesondere die Sammelringnut zusätzlich Abführöffnungen aufweisen, die z.B. in Abführkanäle führen, durch welche überschüssiges Schmieröl durch den Kolben abführbar ist.

Der Kolben selbst bzw. die Kolbenkrone kann in an sich bekannter Weise z.B. aus Stahl und / oder aus einem der eingehend beschrieben verschleissfesten Materialien aufgebaut und / oder mit diesen beschichtet sein, an sich bekannte Kühlbohrungen umfassen und die Ringnuten können ebenfalls wie bereits beschrieben, behandelt bzw. mit einer Verschleissschutzbeschichtung beschichtet sein.

Der Kolben kann an seinem äusseren Umfang Schmierölöffnungen umfassen, durch welche Schmieröl auf die Zylinderlauffläche aufbringbar ist, wobei natürlich alternativ oder zusätzlich auch im Zylinderliner entsprechende Schmierölöffnungen vorgesehen sein können.

Ein ganz besonderer Vorteil der vorliegenden Erfindung liegt vor allem auch darin, dass auch ältere Grossdieselmotoren einfach mit erfindungsgemässen Ölsammelringen und / oder mit einem erfindungsgemässen Kolben nachgerüstet werden können, ohne dass aufwendige Änderungen an den Motoren vorgenommen werden müssen.

Im folgenden wird die Erfindung wird an Hand der Zeichnung näher erläutert. Es zeigen in schematischer Darstellung:
- Fig. 1: eine Zylinderanordnung mit Zylinderliner, Kolben und Frischluftzufuhrsystem;
- Fig. 2: einen erfindungsgemässen Kolben;
- Fig. 3: eine Kolberingpackung mit einem erfindungsgemässen Ölsammelring im Detail;
- Fig. 4: einen Ölsammelring mit Quernut;
- Fig. 4a: einen Schnitt gemäss Fig. 4 entlang der Schnittlinie A-A;
- Fig. 4b: einen Schnitt gemäss Fig. 4 entlang der Schnittlinie B-B.

Fig. 1 zeigt in einer schematischen Darstellung teilweise im Schnitt eine Zylinderanordnung mit Zylinderliner, einem erfindungsgemässen Kolben und Frischluftzufuhrsystem, wobei der Kolben eine Kolbenringpackung mit Ölsammelring umfasst, der im folgenden gesamthaft mit dem Bezugszeichen 1 bezeichnet wird.

Die Zylinderanordnung der Fig. 1 ist eine typische Anordnung, wie sie für längs gespülte Zweitakt-Grossdieselmotoren an sich aus dem Stand der Technik bekannt ist.

Die Anordnung umfasst einen Zylinder 5, der auch als Zylinderliner 5 bezeichnet wird, in welchem ein Kolben 3 entlang einer Zylinderwand 4 des Zylinders 5 hin- und her bewegbar angeordnet ist. Der Kolben 3 umfasst eine Kolbenringpackung 2, die hier schematisch mit lediglich zwei Kolbenringen dargestellt ist, nämlich mit dem dem Brennraum 6 am nächsten gelegenen ersten Kolbenring 7, der auch als Topring 7 bezeichnet wird, der eine erste Lauffläche 701 aufweist, mit welcher der erste Kolbenring 7 auf der Zylinderlauffläche 401 des Zylinders 5 läuft, und dem erfindungsgemässen Ölsammelring 1 mit Sammelringlauffläche 101, wobei in der Darstellung der Fig. 1 die in Umfangsrichtung ausgebildete Ausnehmung nicht zu sehen ist.

Der Brennraum 6 ist darstellungsgemäss oben durch einen Zylinderdeckel 600 mit Einspritzdüse 602 und Auslassventil 601, das in Fig. 1 gerade geöffnet ist, begrenzt.

Der Kolben ist in an sich bekannter Weise über die Kolbenstange 11 mit einem in Fig. 1 nicht dargestellten Kreuzkopf verbunden, von dem aus die hin- und her Bewegung des Kolbens im Betriebszustand des Grossdieselmotors auf die ebenfalls nicht dargestellte Kurbelwelle der Maschine übertragen wird. Die Kolbenstange 11 ist durch den Receiverraum 14, der sich darstellungsgemäss unten an den Zylinderliner 5 anschliesst, und die Stopfbuchse 12 geführt, die den Receiverraum 14 gegen den darunter liegenden Kurbelwellenraum abdichtet, so dass keine Frischluft 15, symbolisiert durch den Pfeil 15, die ein ebenfalls nicht dargestellter Turbolader unter einem hohen Druck, z.B. unter einem Druck von vier bar in den Receiverraum 14 zuführt, aus dem Receiverraum 14 in den Kurbelwellenraum 13 gelangen kann.

Wie der Fig. 1 zu entnehmen und allgemein bekannt ist, liegt im Receiverraum 14 immer der vom Turbolader erzeugte Druck P1 der Frischluft 15 an, der somit konstruktionsbedingt auch immer an der Kolbenunterseite 302 und damit auch ständig am Ölsammelring 1 anliegt.

Es ist eine wesentliche Erkenntnis der vorliegenden Erfindung, dass auch ein mit einer Ausnehmung 103, die in Fig. 1 nicht explizit dargestellt ist, ausgestalteter Ölsammelring 1 trotz der grossen Druckdifferenz P2 minus P1, die sich aufgrund des Druckunterschieds zwischen dem Druck P2 im Brennraum 6 des Zylinders 5 und dem am Ölsammelring 1 anliegenden Druck P1 der Frischluft 15 ergibt, eine genügend hohe Dichtwirkung und Laufsicherheit der Sammelringlauffläche 101 auf der Zylinderlauffläche 401 des Zylinders 5 gewährleistet ist, ohne dass Instabilitäten des Ölsammelrings 1 oder der übrigen Kolbenringe aufgrund von unerwünschten Strömungen von Frischluft 15 am Ölsammelring 1 und den darüber liegenden Kolbenringen vorbei zu befürchten sind, die die Stabilität des Schmierölfilms auf der Zylinderlauffläche 401 gefährden oder den Schmierfilm beschädigen oder unterbrechen könnte.

Ganz offensichtlich reicht wieder Erwarten die eher schwache Dichtwirkung des Toprings und der übrigen Kolberinge der Kolbenringpackung und / oder des Ölsammelrings in Richtung vom Receiverraum 14 zum Brennraum 6 aus, um eine schädliche Luftströmung an der Kolbenringpackung vorbei zu verhindern.

Der Kolbenring 7 und die weiteren Kolbenringe sind nämlich durch ihre spezielle Form und ihren speziellen Aufbau bekanntermassen darauf optimiert, den Brennraum 6 gegen die Unterseite 302 des Kolbens 3 gegen den durch die Verbrennung entstehenden Druck im Brennraum 6 abzudichten. Nicht optimiert ist die Abdichtung in Bezug auf eine Gasströmung in die umgekehrte Richtung, da diese Funktion im Stand der Technik in der Kolbenringpackung 2 im wesentlichen durch den untersten Kolbenring wahrgenommen wurde, der im Stand der Technik eben nicht mit einer erfindungegemässen Ausnehmung 103 ausgestattet war und daher sicher die notwendige Abdichtung gegen den Druck P1 der Frischluft 15 bereits allein gewährleistet hat.

Die Fehleinschätzung, dass ein Ölsabstreifring, wie er im Prinzip von kleinen Viertakt Motoren bekannt ist, bei Grossdieselmotoren nicht einsetzbar ist, konnte somit durch den erfindungsgemässen Ölsammelring 1 erstmals widerlegt werden.

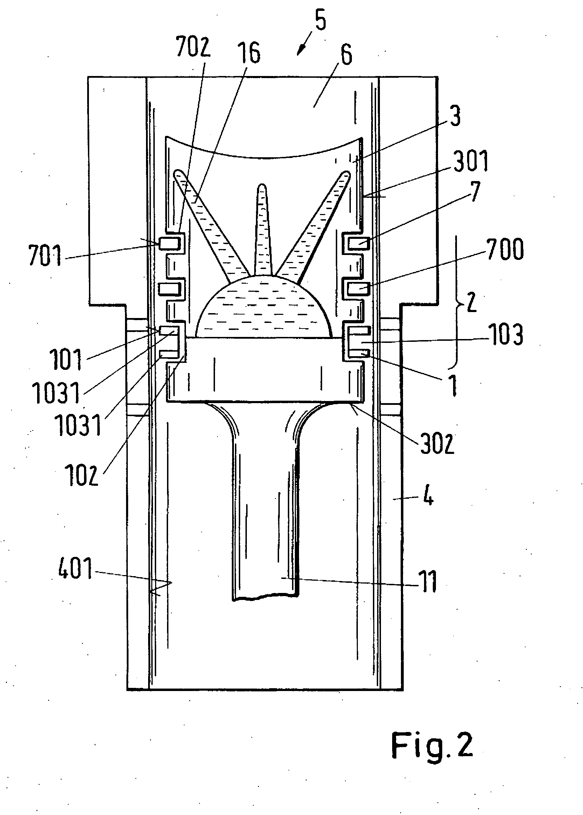

In Fig. 2 ist ein spezielles Ausführungsbeispiel eines erfindungsgemässen Kolbens 3 dargestellt. Der Kolben 3 ist ein innen mit Kühlöl 16 gekühlter Kolben 3, wie er an sich aus dem Stand der Technik bekannt ist. Im vorliegenden Beispiel umfasst die Kolberingpackung 2 des Kolbens 3 drei Kolbenringe, nämlich ein dem Brennraum am nächsten gelegener Topring 7 mit Lauffläche 701, ein der Unterseite 302 des Kolbens 3 am nächsten gelegener erfindungsgemässer Ölsammelring 1, sowie ein dazwischen angeordneter weiterer Kolbenring 700, der den Topring 7, der in der Kolbenringnut 702 vorgesehen ist, in seiner Dichtfunktion unterstützt bzw. gegen Undichtigkeiten absichert.

Der Ölsammelring 1 des erfindungsgemässen Kolbens 3 ist in der Sammelringnut 102 ausgebildet. Bei dem Ausführungsbeispiel der Fig. 2 ist die Ausnehmung 103 des Ölsammelrings 1 durch zwei in Umfangsrichtung des Ölsammelrings 1 verlaufende Sammellippen 1031 begrenzt, so dass am aüsseren Umfang des Ölsammelrings die nutförmige Ausnehmung 103 ausgebildet wird, in der Schmieröl gespeichert bzw. aus der Schmieröl auf die Zylinderlauffläche 401 im Betriebszustand verteilt werden kann.

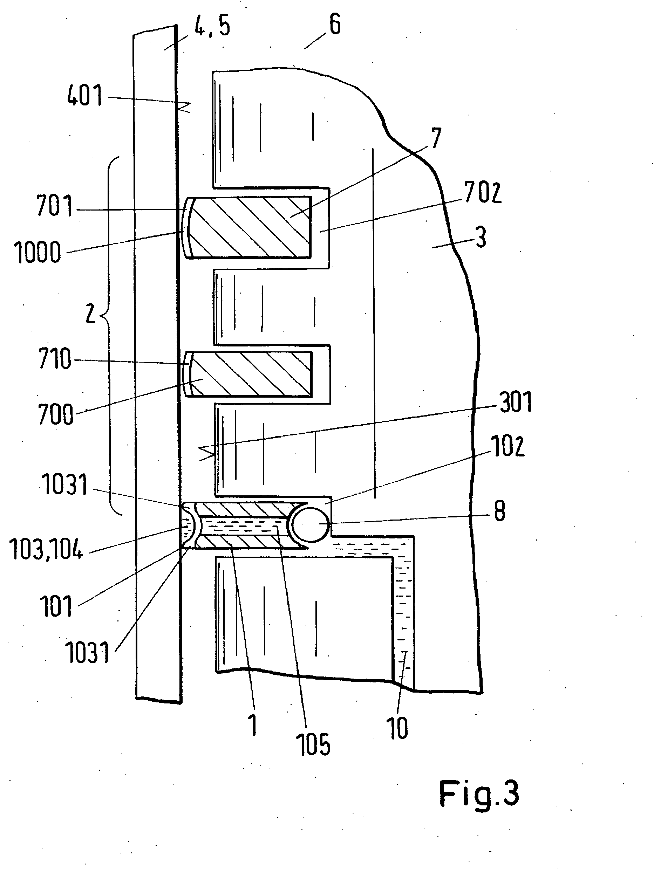

In Fig. 3 ist schliesslich eine Kolberingpackung 2 gemäss Fig. 2 mit einem Ölsammelring 1 eines erfindungsgemässen Kolbens 3 im Detail dargestellt.

Alle Kolberinge 7, 700, 1 weisen im Bereich ihrer Laufflächen 101, 701, 710 eine Verschleissschutzbeschichtung 1000 auf. Der erfindungsgemässe Ölsammelring 1 ist durch ein Federelement 8 derart federnd in der Sammelringnut 102 gelagert, dass er mit einer vorgebbaren Kraft an die Zylinderlauffläche 401 angepresst wird.

Der Ölsammelring 1 umfasst dabei im Bereich der Ausnehmung 103, die in Umfangsrichtung durch zwei Sammellippen 1031 begrenzt wird und so als Ölsammelnut 103 ausgebildet ist, eine Vorratstasche 104 zur Bevorratung bzw. Speicherung von Schmieröl. Desweiteren ist im Ölsammelring 1 eine Öffnung 105 vorgesehen, die im vorliegenden Beispiel eine Abfuhröffnung 105 ist, durch die überschüssiges Schmieröl über einen mit der Sammelringnut 102 in Verbindung stehenden Abführkanal 10 durch das Innere des Kolbens 3 nach aussen abführbar ist.

In einem anderen Beispiel ist die Öffnung 105 eine Zufuhröffnung 105, durch die Schmieröl aus dem Inneren des Kolbens 3 auf die Zylinderwand 4 aufbringbar ist.

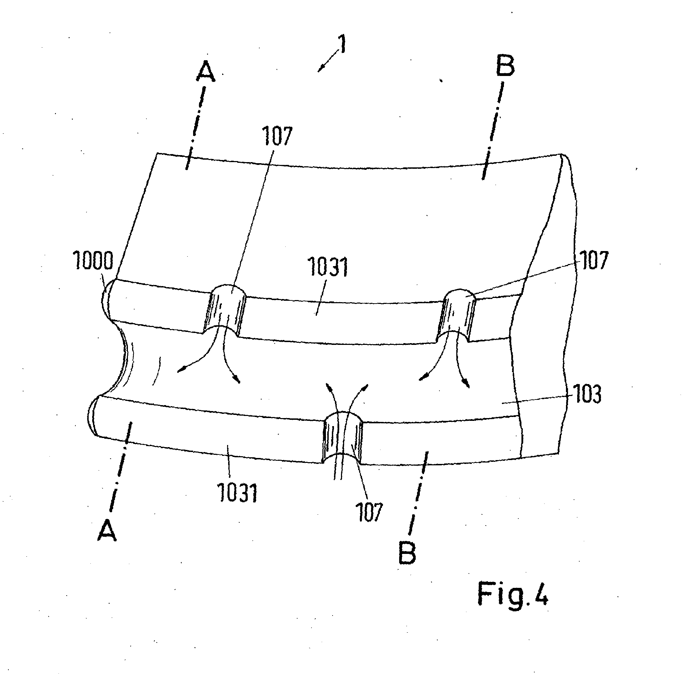

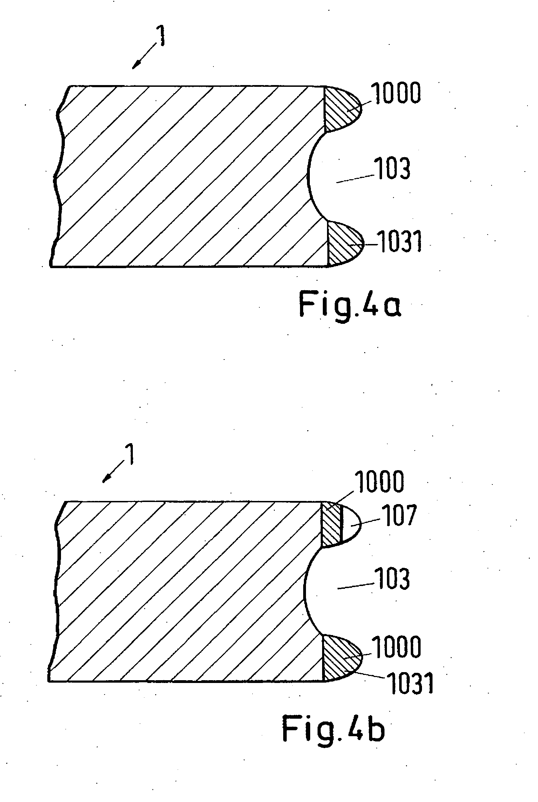

In Fig. 4 ist als weiteres Ausführungsbeispiel eines erfindungsgemässen Ölsammelrings 1 eine Ölsammelring 1 mit Quernut 107 dargestellt.

In der Sammellippe 1031 ist bei diesem Ausführungsbeispiel eine Quernut 107 vorgesehen, die im Speziellen auch als Belüftungsnut 107 bezeichnet werden kann. Die Quernut 107 kann dabei in beiden Sammellippen 1031 eines Ölsammelrings 1 , wie in Fig. 4 schematisch dargestellt, vorgesehen sein, oder nur in einer der beiden Sammellippen 1031. Es versteht, dass auch bei Ausführungsbeispielen von Ölsammelringen, die z.B. nur eine Sammellippe 1031 oder mehr als zwei Sammellippen 1031 haben, ganz analog zu dem Beispiel der Fig. 4 ebenfalls Quernuten 107 vorgesehen sein können.

Durch die Quernut 107 ist ein zusätzlicher bzw. verbesserter Austausch von Schmieröl zwischen der Ausnehmung 103 bzw. der Ölsammelnut 103 und der Zylinderwand 4 möglich, so dass das Schmieröl noch besser dosiert und gleichmässiger auf der in Fig. 4 nicht dargestellten Zylinderwand 4 durch den Ölsammelring 1 verteilbar ist bzw. auf Grund eines Druckgefälles zwischen der durch die Sammellippen 1031 gebildeten Ausnehmung 103 und dem Druck ausserhalb der Ausnehmung 103 des Ölsammelrings 1 ein besserer Austausch von Schmieröl erreichbar ist, so dass z.B. ein zu starkes Abstreifen oder auch ein ungenügendes Abstreifen von Schmieröl verhinderbar ist, weil ein vorgebbarer Anteil an Schmieröl durch die Quernut 107 beim Abstreifen in die Ausnehmung 103 des Ölsammelrings 1 hineinfliessen und / oder herausfliessen kann, und somit der Schmierung weiterhin zur Verfügung steht bzw. dieser entzogen wird.

Dabei ist es, wie bereits erwähnt, selbstverständlich möglich, das Volumen der Ausnehmung 103, die durch die Sammellippen 1031 gebildet wird, im konkreten Fall so zu wählen, das für einen ganz bestimmten Maschinentyp, bzw. für besonders bevorzugte Betriebszustände des Grossdieselmotors, die durch den Ölsammelring 1 im Betriebszustand abzustreifende Menge an Schmieröl optimal angepasst ist. Das heisst, durch die spezielle geometrische Ausgestaltung des Ölsammelrings 1 kann das Verhältnis der Menge an Schmieröl, das abgestreift wird und derjenigen Menge, die zur Schmierung auf der Zylinderwand 4 verteilt wird, eingestellt und optimiert werden.

Das erfindungsgemässe Ausführungsbeispiel eines Ölsammelrings 1 gemäss Fig. 4 verfügt weiterhin über eine Verschleissschutzbeschichtung 1000 und / oder über einen Korrosionsschutz und / oder über eine Einlaufbeschichtung.

Zur Verdeutlichung ist in Fig. 4a ein Schnitt gemäss Fig. 4 entlang der Schnittlinie A-A in einem Bereich des Ölsammelrings 1 schematisch dargestellt, in dem keine Quernut 107 vorgesehen ist. Deutlich zu erkennen ist die durch die Sammellippen 1031 gebildete Ölsammelnut 103, wobei die Sammellippen 1031 mit einer Verschleissschutzbeschichtung 1000 und / oder einer Korrosionsschutzschicht und / oder einer Einlaufschicht versehen sind.

In Fig. 4b ist schliesslich ein weiterer Schnitt gemäss Fig. 4 entlang der Schnittlinie B-B dargestellt. Dieser Schnitt verläuft durch eine Quernut 107, das heisst an einer Stelle im Ölsammelring 1, an der die Verschleissschutzbeschichtung 1000 der darstellungsgemäss oberen Sammellippe etwas dünner ausgebildet ist, so dass die Quernut 107 ausgebildet ist.

Es ist klar, dass der Ölsammelring 1 nicht unbedingt und in jedem Fall eine Verschleissschutzbeschichtung 1000 und / oder eine Korrosionsbeschichtung und / eine Einlaufschicht haben muss und dass die zuvor erwähnten Schichten auch nur in bestimmten Bereichen vorgesehen sein können. So kann z.B. eine Sammellippe 1031 eine entsprechende Beschichtung aufweisen, während eine andere Sammellippe 1031 ein und desselben Ölsammelrings 1 keine solche Beschichtung aufweist.

Es versteht sich von selbst, dass die zuvor beschriebenen Beispiele von Ausführungsformen der Erfindung exemplarisch zu verstehen sind, und insbesondere auch Kolbenringpackungen mit mehr als drei, also mit vier, fünf, sechs oder mehr Kolbenringen umfasst sind, und insbesondere auch alle geeigneten Kombinationen der dargestellten Ausführungsbeispiele von der Erfindung umfasst sind.

## Patentansprüche

1. Kolben für einen Zweitakt-Grossdieselmotor, umfassend einen Ölsammelring (1) zur Bildung einer Kolbenringpackung (2), welcher Kolben im Einbauzustand entlang einer Zylinderwand (4) eines Zylinders (5) des Zweitakt-Grossdieselmotors hin- und her bewegbar angeordnet ist, und wobei die Kolbenringpackung (2) einen einem Brennraum (6) des Zylinders (5) am nächsten gelegenen ersten Kolbenring (7) mit einer ersten Lauffläche (701), sowie den Ölsammelring (1) mit einer Sammelringlauffläche (101) umfasst, und der erste Kolbenring (7) in einer ersten Kolbenringnut (702) und der Ölsammelring (1) in einer Sammelringnut (102) des Kolbens derart angeordnet ist, dass im Betriebszustand die erste Lauffläche (701) des ersten Kolbenrings (7) und die Sammelringlauffläche (101) des Ölsammelrings (1) mit einer Zylinderlauffläche (401) der Zylinderwand (4) in reibendem Kontakt stehen, **dadurch gekennzeichnet, dass** der Ölsammelring mit einer in der Sammelringlauffläche (101) in Umfangsrichtung ausgebildeten Ausnehmung (103) ausgestaltet ist, wobei die Ausnehmung (103) eine Ölsammelnut (103) ist, die durch zwei in Umfangsring des Ölsammelrings (1) verlaufende Sammellippen (1031) gebildet ist, und die Ölsammelnut zum Austausch von Schmieröl mit dem Inneren des Kolbens mit einer Schmierölöffnung in der Sammelringnut (102) in leitender Verbindung steht.

2. Kolben nach Anspruch 1, wobei in der Umfangsfläche (301) des Kolbens und / oder in der Sammelringnut (102) und / oder in einer Kolbenringnut (702) ein Abführkanal (10) vorgesehen ist.

3. Kolben nach einem der vorangehenden Ansprüche, wobei der Ölsammelring (1) eine Vorratstasche (104) zur Bildung eines Ölvorrats umfasst.

4. Kolben nach einem der vorangehenden Ansprüche, wobei der Ölsammelring (1) in der Sammelringnut (102) mit einem Federelement (8) derart federnd gelagert ist, dass der Ölsammelring im Betriebszustand mit einer vorgebbaren Kraft an die Zylinderlauffläche (401) anpressbar ist.

5. Kolben nach einem der vorangehenden Ansprüche, wobei der Ölsammelring (1) eine Abführöffnung (105) und / oder eine Zufuhröffnung (105) zur Zuführung und / oder Abführung von Schmieröl und / oder eine Quernut (107) umfasst.

6. Kolben nach einem der vorangehenden Ansprüche, wobei der Ölsammelring (1) einen Korrosionsschutz und / oder einen Verschleissschutz und / oder eine Einlaufschicht umfasst und / oder der Ölsammelring (1) aus einem korrosionsfesten und / oder aus einem verschleissfesten Material gefertigt ist und / oder der Verschleissschutz eine Verschleisschutzbeschichtung, insbesondere eine metallische und / oder eine nicht metallische Verschleisschutzbeschichtung ist, und / oder der Korrosionsschutz eine Korrosionsschutzbeschichtung, insbesondere eine metallische und / oder eine nicht metallische Korrosionsschutzbeschichtung ist.

7. Kolben nach einem der vorangehenden Ansprüche, wobei der erste Kolbenring (7) und /oder ein weiterer Kolbenring einen Korrosionsschutz und / oder einen Verschleissschutz und / oder eine Einlaufschicht umfasst und / oder der erste Kolbenring (7) und / oder der weitere Kolbenring aus einem korrosionsfesten und / oder verschleissfästen Material gefertigt ist und / oder der Verschleissschutz eine Verschleissschutzbeschichtung (1000), insbesondere eine metallische und / oder eine nicht metallische Verschleissschutzbeschichtung (1000) ist, und / oder der Korrosionsschutz eine Korrosionsschutzbeschichtung, insbesondere eine metallische und / oder eine nicht metallische Korrosionsschutzbeschichtung ist.

8. Kolben nach einem der vorangehenden Ansprüche, wobei der Kolben, insbesondere im Bereich der ersten Kolbenringnut (702) und / oder einer weiteren Kolbenringnut und / oder im Bereich der Sammelringnut (102) einen Korrosionsschutz und / oder einen Verschleissschutz umfasst und / oder der Kolben aus einem korrosionsfesten und / oder verschleissfesten Material gefertigt ist und / oder der Verschleissschutz eine Verschleissschutzbeschichtung (1000), insbesondere eine metallische und / oder eine nicht metallische Verschleissschutzbeschichtung (1000) ist, und / oder der Korrosionsschutz eine Korrosionsschutzbeschichtung, insbesondere eine metallische und / oder eine nicht metallische Korrosionsschutzbeschichtung ist.

## Claims

1. A piston for a large two-stroke diesel engine, comprising an oil collecting ring (1) for the formation of a piston ring pack (2) said piston being arranged to be movable in the installed state to and fro along a cylinder wall (4) of a cylinder (5) of the large two-stroke diesel engine, and wherein the piston ring pack (2) includes a first piston ring (7) lying nearest to a combustion chamber (6) of the cylinder (5) with a first running surface (701) and also including the oil collecting ring (1) with a collecting ring running surface (101), and wherein the first piston ring (7) is arranged in a first piston ring groove (702) and the oil collecting ring (1) is arranged in a collecting ring groove (102) of the piston such that in the operating state the first running surface (701) of the first piston ring (7) and the collecting ring running surface (101) of the oil collecting ring (1) are in frictional contact with a cylinder running surface (401) of the cylinder wall (4) **characterized in that** the oil collecting ring is equipped with a recess (103) formed in the circumferential direction in the collecting ring running surface (101), wherein the recess (103) is an oil collecting groove (103) which is formed by two collecting lips (1031) extending in the circumferential direction of the oil collecting ring (1); and **in that** the oil collecting groove is in conducting communication with a lubrication oil opening in the collector ring groove (102) for the exchange of lubricant with the interior of the piston.

2. A piston in accordance with claim 1, wherein a drainage passage (10) is provided in the circumferential surface (301) of the piston and/or in the collecting ring groove (102) and/or in a piston ring groove (702).

3. A piston in accordance with one of the preceding claims, wherein the oil collecting ring (1) includes a storage pocket (104) for the formation of an oil supply.

4. A piston in accordance with any one of the preceding claims, wherein the oil collecting ring (1) is resiliently supported in the collector ring groove (102) by means of a spring element (8) such that in the operating state the oil collecting ring can be pressed toward the cylinder running surface (401) with a predeterminable force.

5. A piston in accordance with any one of the preceding claims, wherein the oil collecting ring (1) includes a discharge opening (105) and/or a supply opening (105) for the supply and/or drainage of lubricant and/or includes a transverse slot (107).

6. A piston in accordance with any one of the preceding claims, wherein the oil collecting ring (1) includes a protection against corrosion and/or a protection against wear and/or a running in layer and/or the oil collecting ring (1) is manufactured from a corrosion proof and/or a wear proof material and/or the protection against wear is a wear protection coating, in particular a metallic and/or a non-metallic wear protection coating and/or the protection against corrosion is a corrosion protection layer, in particular a metallic and/or a non-metallic corrosion protection coating.

7. A piston in accordance with any one of the preceding claims, wherein the first piston ring (7) and/or a further piston ring includes a protection against corrosion and/or a protection against wear and/or a running in layer and/or the first piston ring (7) and/or the further piston ring is manufactured from a corrosion proof and/or wear proof material and/or the protection against wear is a wear protection coating (1000), in particular a metallic and/or a non-metallic wear protection coating (1000) and/or the protection against corrosion is a corrosion protection layer, in particular a metallic and/or a non-metallic corrosion protection layer.

8. A piston in accordance with any one of the preceding claims, wherein the piston, in particular in the region of the first piston ring groove (702) and/or of a further piston ring groove and/or in the region of the collecting ring groove (102) includes a protection against corrosion and/or a protection against wear and/or the piston is manufactured from a corrosion proof and/or wear proof material and/or the protection against wear is a wear protection coating (1000), in particular a metallic and/or a non-metallic wear protection coating (1000) and/or the protection against corrosion is a corrosion protection coating, in particular a metallic and/or non-metallic corrosion protection coating.

## Revendications

1. Piston pour un grand moteur Diesel à deux temps, comprenant un anneau collecteur d'huile (1) pour la formation d'une garniture de segment de piston (2), ledit piston, à l'état de montage, est disposé d'une manière déplaçable alternativement le long d'une paroi (4) d'un cylindre (5) du grand moteur Diesel à deux temps, et où la garniture de segment de piston (2) comprend un premier segment de piston (7) le plus proche d'une enceinte de combustion (6) du cylindre (5), avec une première surface intérieure (701), ainsi que l'anneau collecteur d'huile (1) avec une surface intérieure d'anneau collecteur (101), et le premier segment de piston (7) est disposé dans une première rainure de segment de piston (702) et l'anneau collecteur d'huile (1) dans une rainure d'anneau collecteur (102) du piston de telle sorte qu'à l'état de fonctionnement, la première surface intérieure (701) du premier segment de piston (7) et la surface intérieure de l'anneau collecteur (101) de l'anneau collecteur d'huile (1) sont en contact de frottement avec une surface intérieure de cylindre (401) de la paroi de cylindre (4), **caractérisé en ce que** l'anneau collecteur d'huile est réalisé avec un évidement (103) réalisé dans la direction périphérique dans la surface intérieure de l'anneau collecteur (101), où l'évidement (103) est une rainure de collecte d'huile (103) qui est formée par deux lèvres de collecte (1031) s'étendant dans la direction périphérique de l'anneau collecteur d'huile, et la rainure de collecte d'huile, pour l'échange de l'huile de lubrification, est en liaison conductrice avec l'intérieur du piston avec une ouverture d'huile de lubrification dans la rainure (102) de l'anneau collecteur.

2. Piston selon la revendication 1, où est prévu dans la face périphérique (301) du piston et/ou dans la rainure d'anneau collecteur (102) et/ou dans une rainure de segment de piston (702) un canal d'évacuation (10).

3. Piston selon l'une des revendications précédentes, où l'anneau collecteur d'huile (1) comprend une poche de réserve (104) pour la formation d'une réserve d'huile.

4. Piston selon l'une des revendications précédentes, où l'anneau collecteur d'huile (1) est logé dans la rainure (102) de l'anneau collecteur avec un élément résiliant (4) de telle manière élastique que l'anneau collecteur d'huile, à l'état de fonctionnement, peut être pressé avec une force prédéfinissable à la surface intérieure de cylindre (401).

5. Piston selon l'une des revendications précédentes, où l'anneau collecteur d'huile (1) comprend une ouverture d'évacuation (105) et/ou une ouverture d'amenée (105) pour l'amenée et/ou l'évacuation de l'huile de lubrification et/ou une rainure transversale (107).

6. Piston selon l'une des revendications précédentes, où l'anneau collecteur d'huile (1) comprend une protection contre la corrosion et/ou une protection contre l'usure et/ou une couche de mise en marche et/ou l'anneau collecteur d'huile (1) est fabriqué en un matériau résistant à la corrosion et/ou un matériau résistance à l'usure, et/ou la protection contre l'usure est un revêtement de protection contre l'usure, en particulier un revêtement de protection contre l'usure métallique et/ou non métallique, et/ou la protection contre la corrosion est un revêtement de protection contre la corrosion, en particulier un revêtement de protection contre la corrosion métallique et/ou non métallique.

7. Piston selon l'une des revendications précédentes, où le premier segment de piston (7) et/ou un segment de piston suivant comprend une protection contre la corrosion et/ou une protection contre l'usure et/ou une couche de mise en marche, et/ou le premier segment de piston (7) et/ou le segment de piston suivant est fabriqué en un matériau résistant à la corrosion et/ou résistant à l'usure, et/ou la protection contre l'usure est un revêtement de protection contre l'usure (1000), en particulier un revêtement de protection contre l'usure (1000) métallique et/ou non métallique, et/ou la protection contre la corrosion est un revêtement de protection contre la corrosion, en particulier un revêtement de protection contre la corrosion métallique et/ou non métallique.

8. Piston selon l'une des revendications précédentes, où le piston, en particulier dans la zone de la première rainure de segment de piston (702) et/ou une rainure de segment de piston suivante et/ou dans la zone de la rainure d'anneau collecteur (102) comprend une protection contre la corrosion et/ou une protection contre l'usure, et/ou le piston est fabriqué en un matériau résistant à la corrosion et/ou résistant à l'usure et/ou la protection contre l'usure est un revêtement de protection contre l'usure (1000), en particulier un revêtement de protection contre l'usure métallique et/ou non métallique (1000), et/ou la protection contre la corrosion est un revêtement de protection contre la corrosion, en particulier un revêtement de protection contre la corrosion métallique et/ou non métallique.
